# EUROPÄISCHE PATENTANMELDUNG

(11) **EP 0 535 366 A1**
(43) Veröffentlichungstag der Anmeldung: **07.04.1993**
(21) Anmeldenummer: 92114543.9
(22) Anmeldetag: 26.08.1992
(51) Int. Cl.: B65G 49/04

(54) **Einrichtung zur Oberflächenbehandlung von dreidimensionalen Spritzgiessteilen**

(30) Priorität: 30.09.1991 DE 4132553
(71) Anmelder: SIEMENS AKTIENGESELLSCHAFT, D-80333 München (DE)
(72) Erfinder: Hosten, Daniel, B-8610 Handzame/Kortemark (BE)

(57) **Zusammenfassung**

Die erfindungsgemäße Einrichtung umfaßt
- mindestens eine Wanne zur Aufnahme eines Behandlungsbades und
- mindestens einen draht- oder bandförmigen Träger (T) für den Transport der Spritzgießteile (S) durch das Behandlungsbad, wobei
- die Spritzgießteile (S) über angespritzte Mitnehmer (M) an dem Träger (T) befestigt sind.

Werden metallische Träger (T) verwendet und vorzugsweise über Kontaktierungsrollen kathodisch kontaktiert, so können in einem mit Anoden ausgerüsteten Metallabscheidungsbad auch galvanische Metallniederschläge auf den Spritzgießteilen (S) abgeschieden werden. Die erfindungsgemäße Einrichtung ist insbesondere für die Herstellung von dreidimensionalen Spritzgießteilen (S) mit integrierten Leiterzügen geeignet.

## Beschreibung

Bei der Herstellung von konventionellen flachen Leiterplatten werden für Spül- und Reinigungsvorgänge sowie für die chemische oder galvanische Metallabscheidung Durchlaufanlagen eingesetzt, durch welche die Leiterplatten in horizontaler Lage und in horizontaler Durchlaufrichtung transportiert werden. Bei der Herstellung von Spritzgießteilen mit integrierten Leiterzügen, die beispielsweise die Form einer offenen Schachtel oder eines Winkels aufweisen, ist im Hinblick auf die dreidimensionale Form ein Einsatz derartiger Horizontal-Durchlaufanlagen nicht möglich. Hier werden sog. Gestellautomaten eingesetzt, die chargenweise beschickt und entladen werden. Zum Bestücken der Warenträger mit den dreidimensionalen Spritzgießteilen werden produktspezifisch aufgebaute Aufnahmen oder Horden benötigt. Neben dem großen zeitlichen Aufwand für die Beschickung und Entladung ist als weiterer gravierender Nachteil derartiger Gestellautomaten die große Verschleppung von Flüssigkeit aus dem jeweiligen Behandlungsbad zu nennen.

Der im Anspruch 1 angegebenen Erfindung liegt das Problem zugrunde, eine als Durchlaufanlage zu betreibende Einrichtung zur Oberflächenbehandlung von dreidimensionalen Spritzgießteilen zu schaffen, die insbesondere auch für die chemische und galvanische Metallabscheidung geeignet sein soll.

Die mit der Erfindung erzielten Vorteile bestehen insbesondere darin, daß die Spritzgießteile über draht- oder bandförmige Träger auf äußerst einfache Weise durch ein Behandlungsbad transportiert werden können und daß die zur Ankopplung der Spritzgießteile erforderlichen Mitnehmer ohne nennenswerten zusätzlichen Aufwand beim Spritzgießen dieser Teile angeformt werden können.

Vorteilhafte Ausgestaltungen der Erfindung sind in den Ansprüchen 2 bis 17 angegeben.

Die Ausgestaltung nach Anspruch 2 ermöglicht eine besonders sichere Führung der Spritzgießteile durch die Behandlungsbäder.

Gemäß Anspruch 3 können die Spritzgießteile direkt beim Spritzgießen mit dem Träger verbunden werden. In bestimmten Fällen kann es aber auch vorteilhaft sein, die Spritzgießteile gemäß Anspruch 4 durch eine Steckverbindung am Träger zu befestigen.

Die Weiterbildung nach Anspruch 5 ermöglicht eine besonders einfache Trennung von Spritzgießteilen und Trägern.

Die Ausgestaltung nach Anspruch 6 ermöglicht durch die schleifenförmige Fuhrung der Spritzgießteile eine erhebliche Reduzierung der Länge der Durchlaufanlage.

Besteht der Träger gemäß den Ansprüchen 7 und 8 aus Metall, vorzugsweise aus Kupfer oder einer Kupferlegierung, so kann er für eine elektrische Kontaktierung der Spritzgießteile herangezogen werden. Unter dieser Voraussetzung ist dann auch gemäß Anspruch 9 eine galvanische Metallabscheidung auf den Spritzgießteilen möglich.

Die Ausgestaltung nach Anspruch 10 ermöglicht eine besonders einfache Kontaktierung des Trägers, wobei gemäß Anspruch 11 durch die Anordnung der Kontaktierungsrollen oberhalb des Badspiegels eine Beeinträchtigung der Kontaktierung durch unerwünschte Metallabscheidungen mit Sicherheit vermieden wird.

Die Ausgestaltung nach Anspruch 12 ermöglicht eine weitere Reduzierung des für die Führung und Kontaktierung der Träger erforderlichen Aufwands.

Die Weiterbildung nach Anspruch 13 ermöglicht einen besonders raumsparenden Aufbau des Galvanikbereichs.

Die Ausgestaltungen nach den Ansprüchen 14 und 15 vereinfachen die Beschickung und Entladung der Durchlaufanlage in erheblichem Maße.

Gemäß Anspruch 16 kann der Hauptantrieb außerhalb des Einflußbereichs der Behandlungsbäder nach dem letzten Behandlungsbad angeordnet werden. Ist dann gemäß Anspruch 17 vor dem ersten Behandlungsbad ein Zusatzantrieb vorgesehen, so kann hierdurch auf einfache Weise die Spannung der Träger konstant gehalten werden.

Ein Ausführungsbeispiel der Erfindung ist in der Zeichnung dargestellt und wird im folgenden näher beschrieben.

Es zeigen:
Figur 1 die Ankopplung von Spritzgießteilen an drahtförmige Träger über seitlich angespritzte Mitnehmer,
Figur 2 die Verbindung von Mitnehmer und Träger durch Umspritzen,
Figur 3 eine Variante, bei welcher der Mitnehmer auf den Träger aufgesteckt wird,
Figur 4 die schleifenförmige Führung der Träger durch ein chemisches Metallabscheidungsbad,
Figur 5 die schlaufenförmige Führung der Träger durch ein galvanisches Metallabscheidungsbad,
Figur 6 die Führung von Trägern und Spritzgießteilen im Auslaufbereich eines Behandlungsbades und
Figur 7 eine komplette Einrichtung mit einer Vielzahl hintereinander angeordneter Behandlungsbäder.

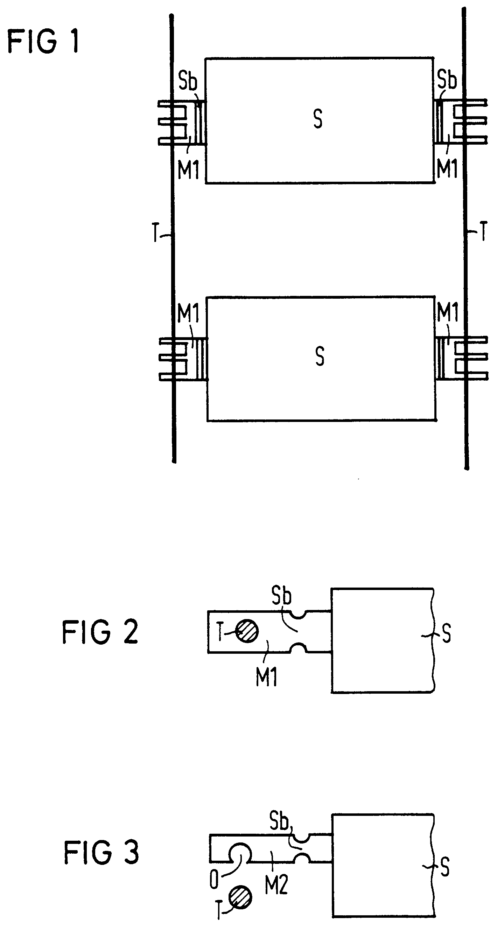

Figur 1 zeigt dreidimensionale Spritzgießteile S, welche die Form einer rechteckförmigen offenen Schachtel aufweisen und im Innenbereich dieser Schachtel mit Leiterzügen versehen werden sollen. Die aus einem hochtemperaturbeständigen Thermoplast, wie z. B. Polyetherimid oder Polyethersulfon, bestehenden Spritzgießteile S, tragen auf gegenüberliegenden Seiten E-förmige angespritzte Mitnehmer M1, die mit parallel im Abstand zueinander angeordneten drahtförmigen Trägern T fest verbunden sind. Gemäß Figur 2 wird die Verbindung von Mitnehmern M1 und Trägern T durch Umspritzen beim Spritzgießen der Spritzgießteile S hergestellt. Gemäß der in Figur 3 dargestellten Variante können die dort mit M2 bezeichneten Mitnehmer auch eine nicht völlig geschlossene, omegaförmige Öffnung O aufweisen, die ein Aufstecken auf den Träger T nach Art einer Schnappverbindung ermöglicht.

Aus den Figuren 1, 2 und 3 ist ferner ersichtlich, daß im Verbindungsbereich zwischen den Spritzgießteilen S und den Mitnehmern M1 bzw. M2 Sollbruchstellen Sb vorgesehen sind, die ein einfaches Lösen der Spritzgießteile S von den beiden Trägern T bzw. ein einfaches Abtrennen der nicht mehr benötigten Mitnehmer M2 ermöglichen.

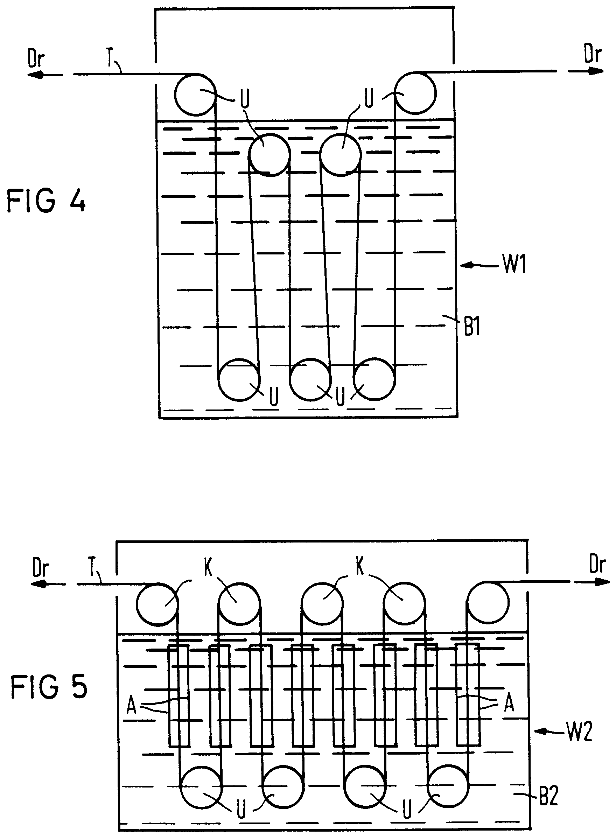

Figur 4 zeigt in stark vereinfachter schematischer Darstellung einen Längsschnitt durch ein in einer Wanne W1 befindliches Behandlungsbad B1, bei welchem es sich um eine chemisches Kupferabscheidungsbad handelt. Der Transport der gemäß Figur 1 an zwei Trägern T befestigten Spritzgießteile S durch das Behandlungsbad B1 ist dabei nur durch den Verlauf eines Trägers T aufgezeigt, der über obere und untere Umlenkrollen U in Schleifen durch die Wanne W1 geführt ist. Die Durchlaufrichtung ist dabei durch Pfeile Dr aufgezeigt.

Figur 5 zeigt in vereinfachter schematischer Darstellung einen Längsschnitt durch ein in einer Wanne W2 befindliches Behandlungsbad B2, bei welchem es sich um ein galvanisches Kupferabscheidungsbad handelt. Auch hier ist der Transport der Spritzgießteile S durch das Behandlungsbad B2 wieder durch den Verlauf eines der beiden Trägers T aufgezeigt, der über obere Kontaktierungsrollen K und untere Umlenkrollen U in senkrechten Schleifen durch die Wanne W2 geführt ist. Die oberhalb des Badspiegels angeordneten Kontaktierungsrollen K übertragen den Anodenstrom über die aus Kupfer bestehenden Träger T und die Mitnehmer M1 auf die Spritzgießteile S (vgl. Fig. 1). Voraussetzung hierfür ist jedoch eine vorausgegangene chemische Metallabscheidung auf den Mitnehmern M1 und den Spritzgießteilen S in dem in Figur 4 dargestellten chemischen Metallabscheidungsbad. Die mit A bezeichneten Anoden sind beidseitig parallel zum Verlauf der Träger T jeweils senkrecht im Behandlungsbad B2 angeordnet. Die Durchlaufrichtung ist wieder durch Pfeile Dr aufgezeigt.

In den jeweils zwischen zwei Anoden A gebildeten galvanischen Zellen kann durch in Figur 5 nicht näher dargestellte Maßnahmen zur Erhöhung der Stromdichten und Abscheidungsraten eine turbulente Elektrolytströmung erzeugt werden.

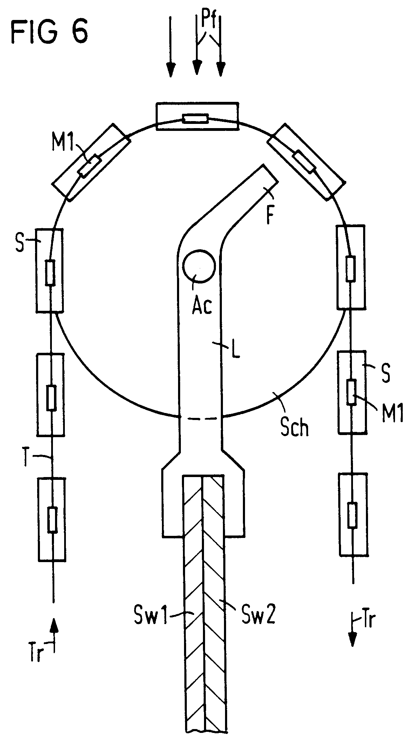

Figur 6 zeigt die Führung der Träger T und der daran befestigten Spritzgießteile S im Auslaufbereich eines Behandlungsbades. Es sind die Seitenwände Sw1 und Sw2 von zwei Wannen zu erkennen, wobei die in Durchlaufrichtung gesehen erste Wanne beispielsweise ein Spülbad aufnimmt, während die zweite Wanne als reine Auffangwanne dient. Auf die benachbarten Seitenwände Sw1 und Sw2 ist ein unten gegabelter Lagerträger L aufgesetzt, auf dessen Achse Ac zwei im Abstand zueinander angeordnete Scheibenräder Sch drehbar angeordnet sind. Über diese Scheibenräder Sch sind die beiden Träger T geführt, wobei die Transportrichtung durch Pfeile Tr aufgezeigt ist. Es ist zu erkennen, daß durch eine derartige Führung der Spritzgießteile S die Verschleppung von Flüssigkeit verringert wird. Zur weiteren Reduzierung der Verschleppung können die Spritzgießteile S abgeblasen oder abgespritzt werden, so wie es durch Pfeile Pf angedeutet ist. Ein schräg angeordneter Fortsatz F des Lagerträgers L begünstigt den Rücklauf der verschleppten Flüssigkeit in das zugehörige Behandlungsbad.

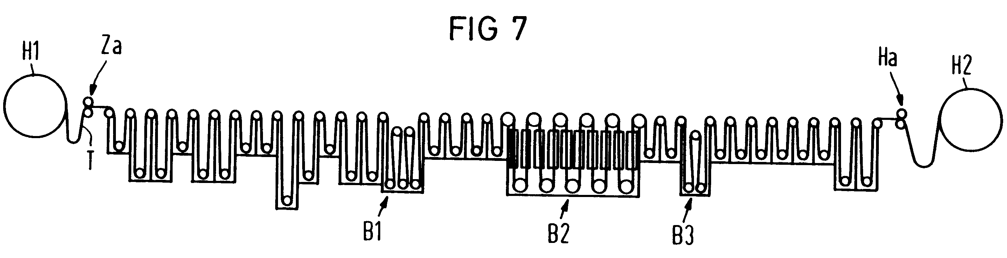

Figur 7 zeigt in stark vereinfachter schematischer Darstellung eine komplette Einrichtung zur Oberflächenbehandlung von dreidimensionalen Spritzgießteilen S (vgl. Fig. 1), die zusammen mit ihren drahtförmigen Trägern T in einer Abwickelstation von einer Haspel H1 abgewickelt werden und nach dem Durchlauf einer Vielzahl von Behandlungsbädern in einer Aufwickelstation auf eine Haspel H2 aufgewickelt werden. Der durch gegeneinander gedrückte Antriebsrollen gebildete Hauptantrieb Ha ist zwischen dem letzten Behandlungsbad und der Haspel H2 angeordnet, während ein in entsprechender Weise aufgebauter Zusatzantrieb Za zur Konstanthaltung der Spannung der Träger T zwischen der Haspel H und dem ersten Behandlungsbad angeordnet ist.

Von den hintereinander angeordneten Behandlungsbädern sind die mit B1, B2 und B3 bezeichneten Behandlungsbäder hervorzuheben. Bei dem Behandlungsbad B1 handelt es sich um das in Figur 4 dargestellte chemische Kupferabscheidungsbad, während es sich bei dem Behandlungsbad B2 um das in Figur 5 dargestellte galvanische Kupferabscheidungsbad handelt. Bei dem Behandlungsbad B3 handelt es sich um ein chemisches Zinnabscheidungsbad. Bei den übrigen nicht näher bezeichneten Behandlungsbädern handelt es sich in erster Linie um Spül- und Reinigungsbäder.

Die auf der Haspel H2 aufgewickelten Spritzgießteile S werden anschließend zur Strukturierung der Leiterzüge mit einem Laserstrahl bearbeitet, worauf die Leiterzüge durch galvanische Kupferabscheidung in einem gemäß Figur 5 aufgebauten Behandlungsbad verstärkt werden. Die einzelnen Verfahrensschritte bei der Herstellung von Spritzgießteilen mit integrierten Leiterzügen sind beispielsweise in der älteren Patentanmeldung P 41 29 532.3 beschrieben.

## Patentansprüche

1. Einrichtung zur Oberflächenbehandlung von dreidimensionalen Spritzgießteilen (S) mit
- mindestens einer Wanne (W1, W2) zur Aufnahme eines Behandlungsbades (B1; B2) und
- mindestens einem draht- oder bandförmigen Träger (T) für den Transport der Spritzgießteile (S) durch das Behandlungsbad (B1; B2; B3), wobei
- die Spritzgießteile (S) über angespritzte Mitnehmer (M1; M2) an dem Träger (T) befestigt sind.

2. Einrichtung nach Anspruch 1,
**gekennzeichnet durch**
zwei im Abstand zueinander angeordnete Träger (T), an welchen die Spritzgießteile (S) über seitlich angespritzte Mitnehmer (M1; M2) befestigt sind.

3. Einrichtung nach Anspruch 1 oder 2,
**dadurch gekennzeichnet,**
daß die Mitnehmer (M1) mit dem Träger (T) durch Umspritzen verbunden sind.

4. Einrichtung nach Anspruch 1 oder 2,
**dadurch gekennzeichnet,**
daß die Mitnehmer (M) auf den Träger (T) aufgesteckt sind.

5. Einrichtung nach einem der vorhergehenden Ansprüche,
**dadurch gekennzeichnet,**
daß die Mitnehmer (M) über Sollbruchstellen (Sb) mit den Spritzgießteilen (S) verbunden sind.

6. Einrichtung nach einem der vorhergehenden Ansprüche,
**dadurch gekennzeichnet,**
daß der Träger (T) über obere und untere Umlenkrollen (U) in Schleifen durch das Behandlungsbad (B1; B2; B3) geführt ist.

7. Einrichtung nach einem der vorhergehenden Ansprüche,
**dadurch gekennzeichnet,**
daß der Träger (T) aus Metall besteht.

8. Einrichtung nach Anspruch 7,
**dadurch gekennzeichnet,**
daß der Träger (T) aus Kupfer oder einer Kupferlegierung besteht.

9. Einrichtung nach Anspruch 7 oder 8,
**dadurch gekennzeichnet,**
daß das Behandlungsbad (B2) ein galvanisches Metallabscheidungsbad ist, in welchem mindestens eine Anode (A) angeordnet ist und daß der Träger (T) über mindestens ein Kontaktierorgan kathodisch kontaktiert ist.

10. Einrichtung nach Anspruch 9,
**dadurch gekennzeichnet,**
daß das Kontaktierorgan durch eine Kontaktierungsrolle (K) gebildet ist.

11. Einrichtung nach Anspruch 10,
**dadurch gekennzeichnet,**
daß die Kontaktierungsrolle (K) oberhalb des Badspiegels angeordnet ist.

12. Einrichtung nach Anspruch 11,
**dadurch gekennzeichnet,**
daß die Kontaktierungsrolle (K) gleichzeitig als obere Umlenkrolle dient.

13. Einrichtung nach einem der Ansprüche 9 bis 12,
**dadurch gekennzeichnet,**
daß der Träger (T) in senkrechten Schleifen durch das Behandlungsbad (B2) geführt ist und daß beidseitig parallel zum Trägerverlauf senkrechte Anoden (A) im Behandlungsbad (B2) angeordnet sind.

14. Einrichtung nach einem der vorhergehenden Ansprüche,
**dadurch gekennzeichnet,**
daß der Träger (T) mit den Spritzgießteilen (S) von einer vor dem ersten Behandlungsbad (B1; B2) aufgestellten Haspel (H1) abgewickelt wird.

15. Einrichtung nach einem der vorhergehenden Ansprüche,
**dadurch gekennzeichnet,**
daß der Träger (T) mit den Spritzgießteilen (S) auf eine nach dem letzten Behandlungsbad (B1; B2) aufgestellte Haspel (H2) aufgewickelt wird.

16. Einrichtung nach einem der vorhergehenden Ansprüche,
**dadurch gekennzeichnet,**
daß der Träger (T) über einen nach dem letzten Behandlungsbad (B1; B2) angeordneten Hauptantrieb (Ha) angetrieben ist.

17. Einrichtung nach Anspruch 16,
**dadurch gekennzeichnet,**
daß vor dem ersten Behandlungsbad (B1; B2) der Träger (T) durch einen Zusatzantrieb (Za) angetrieben ist.
